(19) Europäisches Patentamt
European Patent Office
Office européen des brevets

(11) Veröffentlichungsnummer: **0 281 765 B1**

# (12) EUROPÄISCHE PATENTSCHRIFT

(45) Veröffentlichungstag der Patentschrift: **28.08.91**

(21) Anmeldenummer: **88101721.4**

(22) Anmeldetag: **06.02.88**

(51) Int. Cl.⁵: **C22C 37/10**, F16D 65/10, F16D 65/12

(54) **Gusseisen zur Fertigung von Bremsenkörpern.**

(30) Priorität: **14.02.87 DE 3704680**

(43) Veröffentlichungstag der Anmeldung:
**14.09.88 Patentblatt 88/37**

(45) Bekanntmachung des Hinweises auf die Patenterteilung:
**28.08.91 Patentblatt 91/35**

(84) Benannte Vertragsstaaten:
**DE ES FR GB IT SE**

(56) Entgegenhaltungen:
**DE-A- 3 305 184**

**CHEMICAL ABSTRACTS, Band 98, Nr. 12, 21. März 1983, Seite 234, Zusammenfassung Nr. 93386s, Columbus, Ohio, US; E.A. GURVICH et al.: "Iron casting in a permanent mold", & METALLURGIYA (MINSK) 1982, 16, 93-4**

(73) Patentinhaber: **Schwäbische Hüttenwerke Gesellschaft mit beschränkter Haftung Wilhelmstrasse 67 Postfach 3280 W-7080 Aalen-Wasseralfingen(DE)**

(72) Erfinder: **Metzler, Horst Am Eichbühl 27 W-7200 Tuttlingen(DE)**
Erfinder: **Schwarz, Günther Galgenweg 14 W-7200 Tuttlingen 16(DE)**

(74) Vertreter: **Lorenz, Werner, Dipl.-Ing. Fasanenstrasse 7 W-7920 Heidenheim(DE)**

**Beschreibung**

Die Erfindung betrifft ein Verfahren zur Herstellung von Gußeisen zur Fertigung von Bremsenkörpern, insbesondere von belüfteten Bremsscheiben.

In der DE-OS 33 05 184 ist ein Gußeisen mit folgender chemischen Zusammensetzung beschrieben:

$3.7 \rightarrow 3.9 \%$

| Kohlenstoff | |
| --- | --- |
| Mangan | 0,6 - 0,9% |

| Silizium | 1,8 - 2,5% |
| --- | --- |
| Phosphor | < 0,10 % |
| Schwefel | < 0,12 % |
| Rest Eisen | |

Diese Legierung weist ein perlitisches Grundgefüge auf.

Durch die Entwicklung von asbestfreien Bremsbelägen ist es auch notwendig geworden Gußeisenlegierungen für die Bremskörper zu schaffen, die diese höhere Temperaturen ohne Schaden ertragen. Hierzu ging die allgemeine Tendenz bei den Anwendern dahin, hoch warmfeste Eisensorten mit höherem Kohlenstoffgehalt zu verwenden, da der Kohlenstoff in Form von Graphitausscheidung eine hohe Wärmeleitfähigkeit besitzt. Nachteilig dabei ist jedoch, daß ein hoher Kohlenstoffgehalt ein grobes Gefüge ergibt und die Festigkeit dadurch zunehmend beeinträchtigt wird.

In der DE-OS 33 05 184 wurde versucht hier einen entsprechenden Ausgleich bzw. Kompromiß zu erreichen. In der Praxis hat sich jedoch herausgestellt, daß die damit erreichten Festigkeitswerte nicht immer ausreichend sind.

Der vorliegenden Erfindung liegt daher die Aufgabe zugrunde ein Verfahren zur Herstellung von Gußeisen zur Fertigung von Bremsenkörpern zu schaffen, wobei das dabei hergestellte Gußeisen bei einer hohen Temperaturbeständigkeit gleichzeitig auch eine hohe Zugfestigkeit besitzt.

Erfindungsgemäß wird diese Aufgabe durch eine Legierung mit folgender chemischer Zusammensetzung gelöst:

| Kohlenstoff | 3,65 - 3,75% |
| --- | --- |
| Mangan | 0,60 - 0,70% |
| Silizium | max. 2,10% |
| Phosphor | < 0,09% |
| Schwefel | < 0,10% |
| Eisen | Rest |

wobei diese Legierung in Kokillen gegossen wird, anschließend in einem Glühofen auf eine Temperatur von wenigstens 920° C gebracht und dort für 30 Minuten bei dieser Temperatur gehalten wird, wonach eine langsame Abkühlung im Glühofen erfolgt.

Durch den hohen Kohlenstoffgehalt wird eine bessere Wärmeleitfähigkeit der Bremskörper, insbesondere von Bremsscheiben, beim Bremsvorgang durch eine entsprechende Verteilung des Hitzestaues an den Reibflächen, sowie eine höhere thermische Beständigkeit und damit die Vermeidung von Brandrissen erreicht. Weiterhin wird die Fließfähigkeit des Flüssigeisens in der Kokille durch den hohen Kohlenstoffgehalt verbessert.

Es wurde nun überraschenderweise festgestellt, daß bei dem erfindungsgemäßen Grauguß, der aufgrund des hohen Kohlenstoffgehaltes Festigkeitswerte im Bereich GG15 erwarten läßt, trotzdem Zugfestigkeitswerte im Bereich der Werkstoffwerte von GG30 aufweist. In Versuchen wurde dabei festgestellt, daß Zugfestigkeiten von über 320 N/mm² erreichbar sind und zwar trotz des relativ hohen Kohlenstoffgehaltes. Offensichtlich ist dies darauf zurückzuführen, daß im Gegensatz zu einem langsamen Abkühlen des Gusses, bei dem der Kohlenstoff überwiegend in Form von Graphit kristallisiert, dies bei dem erfindungsgemäßen in einer Kokille gefertigten Gußeisen nicht der Fall ist. Bei dem erfindungsgemäßen Gußeisen werden die Graphitlamellen kleiner und das Gefüge wird feinkörniger, wodurch sich die hohe Zugfestigkeit und zwar trotz des relativ hohen Kohlenstoffgehaltes ergibt.

Zwar wurden bisher schon öfters Versuche bezüglich einer Herstellung von Gußeisen in Kokillen unternommen, welche jedoch erfolglos geblieben sind.

Die Erfinder haben nun in langwierigen Versuchen festgestellt, daß ein Kokillenguß mit einem Gußeisen der erfindungsgemäßen Zusammensetzung möglich ist. Insbesondere gilt dies für eine belüftete Bremsscheibe, die einen Kern besitzt, der eine Verrippung der Belüftung bildet. Eine derartige Bremsscheiben besitzt auf beiden Seiten zwei Reibringe, die mit der Verrippung verbunden sind.

Bei dem erfindungsgemäßen Kokillenguß muß mit einem Ferritanteil von ca. 5 - 10% gerechnet werden. Das in der Kokille gefertigte Gußeisen wird in einem Glühprozeß nachbehandelt, um nicht nur eine Entspannung, sondern auch eine Gefügeumwandlung zu erreichen. Durch die schnelle Abkühlung entsteht nämlich Carbid, weshalb nachträglich auf Carbidzerfall geglüht werden muß, d.h. bei Temperaturen von ca. 920 Grad Celsius.

Beim Kokillenguß sollte der Stahlanteil des gattierten Eisensatzes 10% max. nicht überschreiten, da sich anderenfalls beim Kokillengießen Perlen bilden würden.

Beim Glühen auf Karbidzerfall werden die zu glühenden Teile auf 920 Grad Celsius erwärmt und auf dieser Temperatur für mindestens eine halbe Stunde gehalten. Anschließend erfolgt eine allmähliche Abkühlung.

**Patentansprüche**

1. Verfahren zur Herstellung von Gußeisen zur Fertigung von Bremsenkörpern, insbesondere von belüfteten Bremsscheiben, mit einer Legierung aus,

| Kohlenstoff | 3,65 – 3,75% |
|---|---|
| Mangan | 0,60 – 0,70% |
| Silizium | max. 2,10% |
| Phosphor | < 0,09% |
| Schwefel | < 0,10% |
| Eisen | Rest |

**dadurch gekennzeichnet**, daß
sie in Kokillen gegossen wird, anschließend in einem Glühofen auf eine Temperatur von wenigstens 920° C gebracht und dort für 30 Minuten bei dieser Temperatur gehalten wird, wonach eine langsame Abkühlung im Glühofen erfolgt.

**Claims**

1. Process for the production of cast iron for the manufacture of brake elements, especially ventilated brake discs, with an alloy consisting of

| carbon | 3.65 - 3.75 % |
| manganese | 0.60 - 0.70 % |
| silicon | max. 2.10 % |
| phosphorous | < 0.09 % |
| sulphur | < 0.10 % |
| iron | remainder, |

characterised in that it is chill-cast, then is brought to a temperature of at least 920° C in an annealing furnace and is kept there at this temperature for 30 minutes, after which it is cooled slowly in the annealing furnace.

**Revendications**

1. Procédé de fabrication de fonte pour la production d'éléments de freins, notamment de disques de freins ventilés, avec un alliage composé de :

| carbone: | 3,65 - 3,75 % |
| manganèse: | 0,60 - 0,70 % |
| silicium: | max. 2,10 % |
| phosphore: | < 0,09 % |
| soufre: | < 0,10 % |
| fer: | le reste, |

caractérisé en ce que l'alliage est coulé en coquille, puis est porté à une température d'au moins 920° C dans un four à recuire et y est maintenu à cette température pendant 30 minutes, après quoi a lieu un refroidissement lent dans le four.